(19) Europäisches Patentamt
European Patent Office
Office européen des brevets

(11) EP 2 785 109 A1

(12) EUROPEAN PATENT APPLICATION

(43) Date of publication:
01.10.2014 Bulletin 2014/40

(51) Int Cl.:
*H04W 48/00* (2009.01)

(21) Application number: 13250042.2

(22) Date of filing: 28.03.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: British Telecommunications public
limited company
London EC1A 7AJ (GB)

(72) Inventor: The designation of the inventor has not
yet been filed

(74) Representative: Chan, Robin
British Telecommunications plc
Intellectual Property Department
PPC5A, BT Centre
81 Newgate Street
London EC1A 7AJ (GB)

(54) **Gateway selection**

(57)     In an Evolved Packet Core (EPC) network, user devices connect to the network and are allocated a packet gateway to route all traffic through the core. A reselection function examines the type of data being transmitted by the user device and determines if a more suitable packet gateway better matching the application requirements of the current data traffic is available. If one is available, the reselection function causes the selected gateway to take over data routing for the user device.

Fig. 1

**Description**

Field of the Invention

The present invention relates to data networks and in particular to gateway reselection in a network core.

Background to the Invention

Within cellular data networks, the typical architecture includes an access network of cellular base stations connected to a network core via gateways. Data packets are then transported across the core to external networks such as content delivery networks or application servers.

As usage of the networks increases, there is a need to optimise the flow path of data across the various parts of the network.

Summary of the Invention

In one aspect, the present invention provides a method of routing data traffic across a network between a user device and an application server, the data traffic being transferred via at least one of a plurality of packet gateways, the method comprising: processing the data traffic being transmitted by the user device to determine service requirements of said traffic; comparing the service requirements against a set of gateway properties relating to each of the plurality of gateways in the network; selecting a different one of said at least one gateways over which said user data traffic should be transferred in dependence on the comparison step; and transferring data traffic between said user device and said application server via the selected gateway.

In another aspect, the present invention provides apparatus for selecting a gateway device for data transfer between a user device and an application server, the data traffic being transferred via at least one of a plurality of packet gateways, comprising: means for determining service requirements of said traffic; means for comparing the service requirements against a set of gateway properties relating to each of the plurality of gateways in the network; means for selecting a different one of said at least one gateways over which said user data traffic should be transferred in dependence on the comparison; and means for transferring data traffic between said user device and said application server via the selected gateway.

In a further aspect, the present invention provides an evolved packet core network system having a plurality of packet gateways and configured to route data traffic between a user device and an application server, comprising: application determining means for determining the requirements of data traffic being transmitted by the user device; gateway reselection means for: comparing the requirements against a set of gateway properties associated with the gateways in the network; selecting a gateway which is better suited to the data traffic; and causing the selected gateway to route data for the user device.

Brief Description of the Drawings

Embodiments of the invention will now be explained with the aid of the accompanying figures in which:

Figure 1 is schematic diagram of a network providing gateway reselection in accordance with a first embodiment of the invention;
Figure 2 is a schematic diagram showing the functional components of a PGW Optimisation Function (POF) module in the network illustrated in Figure 1;
Figure 3 is a flowchart showing the overall operation of the POF;
Figure 4 is a flowchart showing the ranking processing of the POF in more detail;
Figure 5 is a schematic diagram of example contents of a data store in the POF module;
Figure 6 is a system flowchart showing the interaction between the various components of the network illustrated in Figure 1 in accordance with the first embodiment;
Figure 7 is schematic diagram of a network providing gateway reselection in accordance with a second embodiment of the invention;
Figure 8 is a system flowchart showing the interaction between the various components of the network illustrated in Figure 7 in accordance with the second embodiment;
Figure 9 is schematic diagram of a network providing gateway reselection in accordance with a third embodiment of the invention; and
Figure 10 is a system flowchart showing the interaction between the various components of the network illustrated in Figure 9 in accordance with the first embodiment.

Detailed Description of Preferred Embodiments

First Embodiment

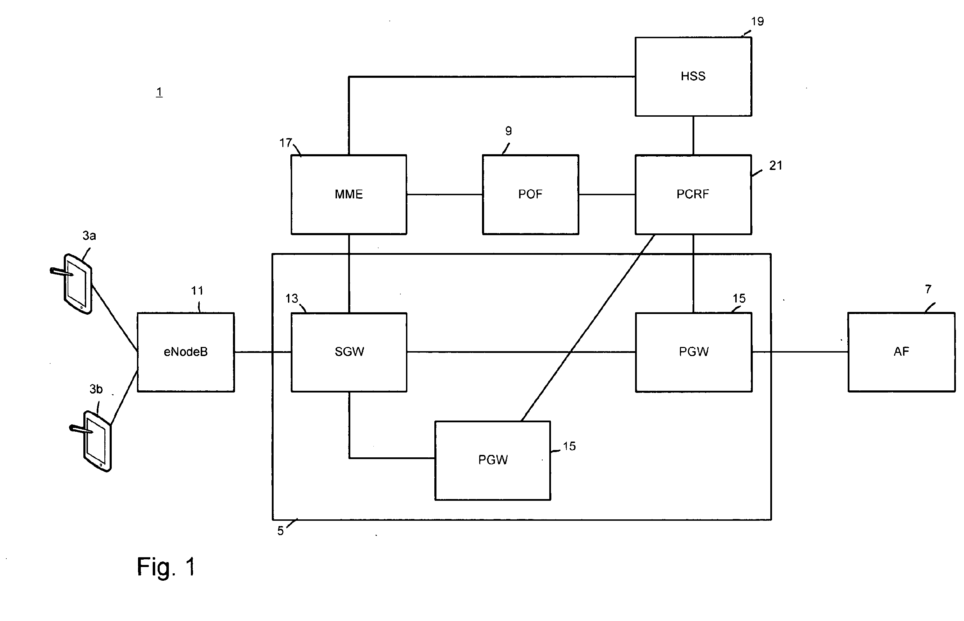

Figure 1 is schematic diagram of a network 1 providing gateway reselection in accordance with a first embodiment of the invention. The network 1 can be divided into several main groups of components: user devices 3, a set of components associated with a network core 5, and additionally an Application Function (AF) 7 and a PGW Optimisation Function (POF) 9.

User devices 3 communicate with "Evolved Node B" cellular base stations 11 using a cellular wireless data protocol such as Long Term Evolution (LTE) to link into the network core 5 and the functions associated therewith.

The network core 5 is an Evolved Packet Core (EPC) conforming to the Long Term Evolution (LTE) standard. The EPC 5 contains a Serving Gateway (SGW) 13 and a number of Packet Data Network Gateways (PGW) 15. In this embodiment, only two PGWs are shown for ease of explanation. Each SGW 13 routes and forwards user data packets from the user devices 3 while each PGW 15 is linked to the SGW 13 within the EPC network 5 and provides connectivity to external networks such as remote servers (not shown) located on a wide area network such as the Internet (not shown).

The EPC network core 5 is also associated with a number of management modules. A Mobile Management Entity (MME) 17 is responsible for authenticating user devices onto the network core 5 by reference to a Home Subscriber Server 19 and Policy Rules and Charging Function (PCRF) 21 and controlling the user device 3 connections within the network core 5. When a user device 3 has connected to a base station 11, the base station 11 forwards the access request to the MME 17 which authenticates the user device 3. If the user device 3 is authorised, then the MME selects one of the PGWs 15 to service the data connection for the user device 3, typically the selection is based on subscriber/APN information and the selected PGW 15 is maintained for the duration of the data session.

The static selection of the PGW for the user device make lead to situations where data traffic takes a non-optimal route through the network due to the requirements of the user device's data session being ignored. Therefore in this embodiment, the application function 7 is provided to examine the type of data session being used by the user device 3 and the POF 9 enables reselection of a more suitable PGW in accordance with the needs of the user devices 3.

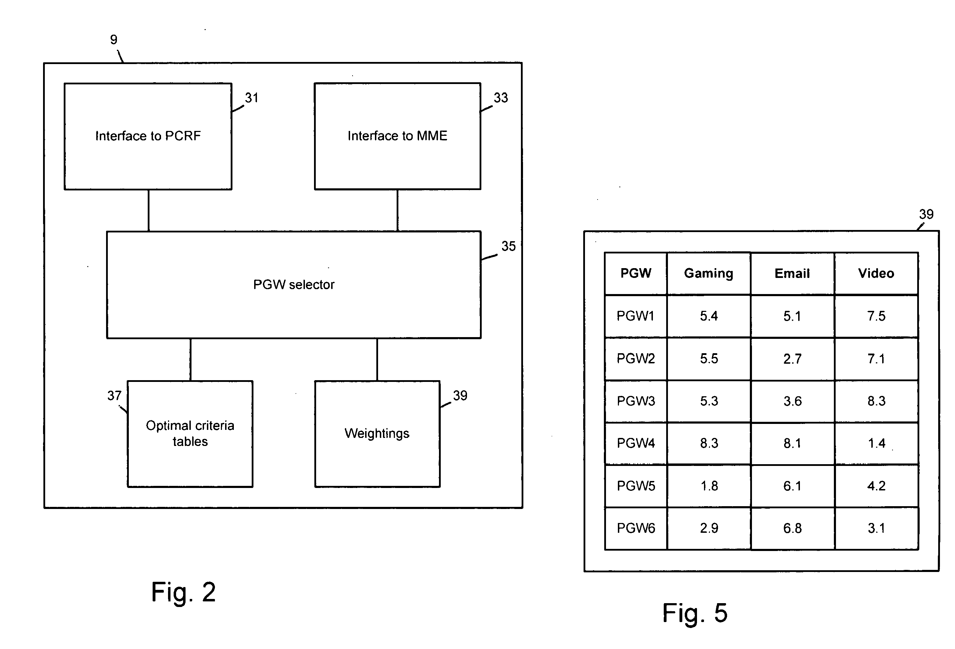

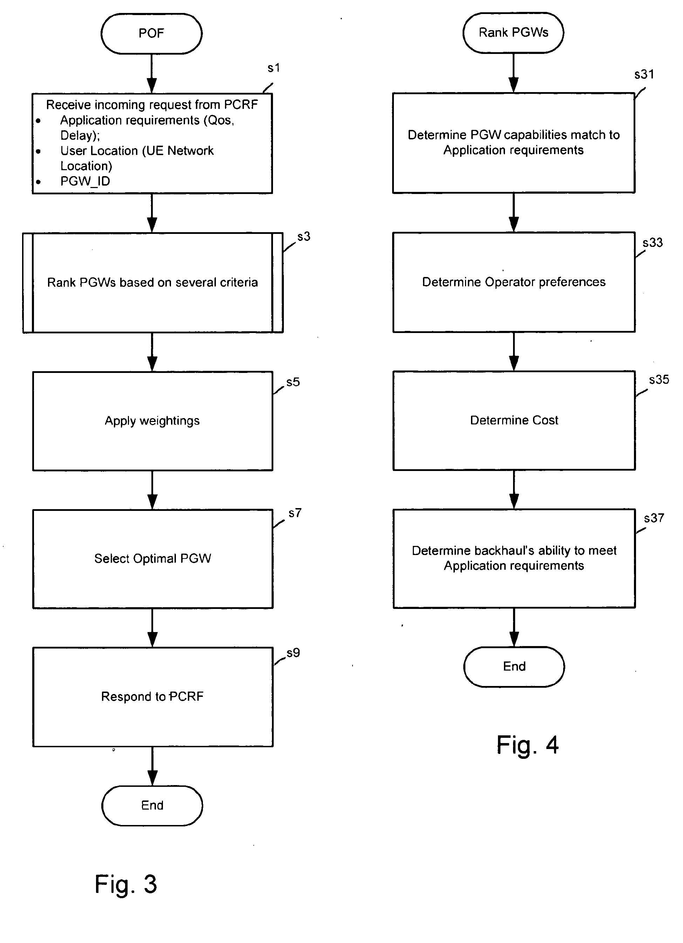

Figure 2 is a schematic diagram showing the functional components of a PGW Optimisation function (POF) module in the network 5 illustrated in Figure 1. The POF 9 contains an interface 31 to the PCRF 21 and an interface 33 to the MME 17 to send and receive instructions from those units. A PGW selector 35 is responsible for determining whether a more suitable PGW 15 is available using criteria tables 37 and a weightings data store 39 as will be described with reference to Figures 3 to 5.

Figure 3 is a flowchart showing the overall operation of the POF 9 to determine which of the available PGWs 15 is the most suitable for a given user device 3. In step s1 the POF 9 receives a request from the PCRF 21 via the PCRF interface 31. The request provides information required by the POF 9:

- the application requirements such as QoS and delay;
- the network location of the user device 3; and
- the identity of the current PGW.

Once this information has been received, in step s3 the available PGWs 15 are ranked by the PGW selector 35 in accordance with the criteria stored in the criteria tables 37.

Figure 4 is a flowchart showing the ranking processing of the POF in more detail. In step s31, the PGW selector 35 determines the degree of matching between the PGW capabilities and the application requirements (PGW Capabilities) to produce a first weighted list PC. For example, in a case where there are several PGWs capable of providing gaming services, an exemplary PC weighting list may be:

| PC | |
|---|---|
| PGW 1 | weight 10 |
| PGW2 | weight 10 |
| PGW4 | weight 6 |
| PGW 5 | weight 5 |
| PGW 3 | weight 3 |
| PGW 6 | weight 3 |

Other criteria are stored in the optimal criteria tables 37 and in this embodiment the optimal criteria tables 37 include operator preference criteria, network cost criteria and backhaul criteria.

Therefore in step s33, the PGW selector 35 determines the operator preference OP parameters list which may relate to network restrictions for certain groups of users or emergency call capability in disaster recovery situations. An example OP weighting list generated for this processing may be:

| OP | |
|---|---|
| PGW 4 | weight 10 |
| PGW2 | weight 5 |
| PGW1 | weight 3 |
| PGW 5 | weight 1 |
| PGW 3 | weight 1 |
| PGW 6 | weight 1 |

In step s35, the PGW selector 35 determines a network cost (NC) metric. This maybe real financial cost in addition to network cost. An example NC weighting list is:

| NC | |
|---|---|
| PGW 4 | weight 10 |
| PGW3 | weight 7 |
| PGW6 | weight 6 |
| PGW 1 | weight 5 |
| PGW 2 | weight 4 |
| PGW 5 | weight 1 |

The final metric is a measure of the backhaul network's capability (BC) to meet the application requirements in terms of Quality of Service (QoS) and delay, etc. Example BC weighting list may be:

| BC | |
|---|---|
| PGW 3 | weight 10 |
| PGW4 | weight 7 |
| PGW6 | weight 6 |
| PGW 1 | weight 5 |
| PGW 2 | weight 4 |
| PGW 5 | weight 1 |

Having obtained the individual rankings, processing returns to step s5 in which weightings are applied to the calculated figures and stored in the weightings data store 39.

In this embodiment, the final weighting formula is:

$$\text{Final weight} = 0.2*PC + 0.3*BC + 0.3*OP + 0.2*NC$$

Using this weighting the Final weights in this example are:

| Gaming | |
|---|---|
| PGW 1 | Final weight 5.4 |
| PGW2 | Final weight 5.5 |
| PGW3 | Final weight 5.3 |
| PGW 4 | Final weight 8.3 |
| PGW 5 | Final weight 1.8 |
| PGW 6 | Final weight 1.29 |

In this example, PGW4 is the best PGW for handling gaming applications and therefore the POF would suggest this gateway.

In step s7 the deemed optimal access point is selected and in step s9, a response is sent back to the PCRF.

The POF therefore uses various metrics and calculations to determine the optimal PGW 15 which can service the particular application requirements of a user device 3.

Due to differences between PGW specific hardware implementations and the variety of different applications and services capable of being operated over the network, the POF stores several different weightings and profiles to fit the different applications. An example of the Weightings data store for several profiles of applications is shown in Figure 5. In this embodiment, there are profiles for gaming, video and email, with different PGWs being better suited to one of the three applications. As shown in Figure 1, one smartphone is gaming while another is streaming video and therefore in accordance with the first embodiment, the preferred PGWs are PGW4 and PGW3 respectively.

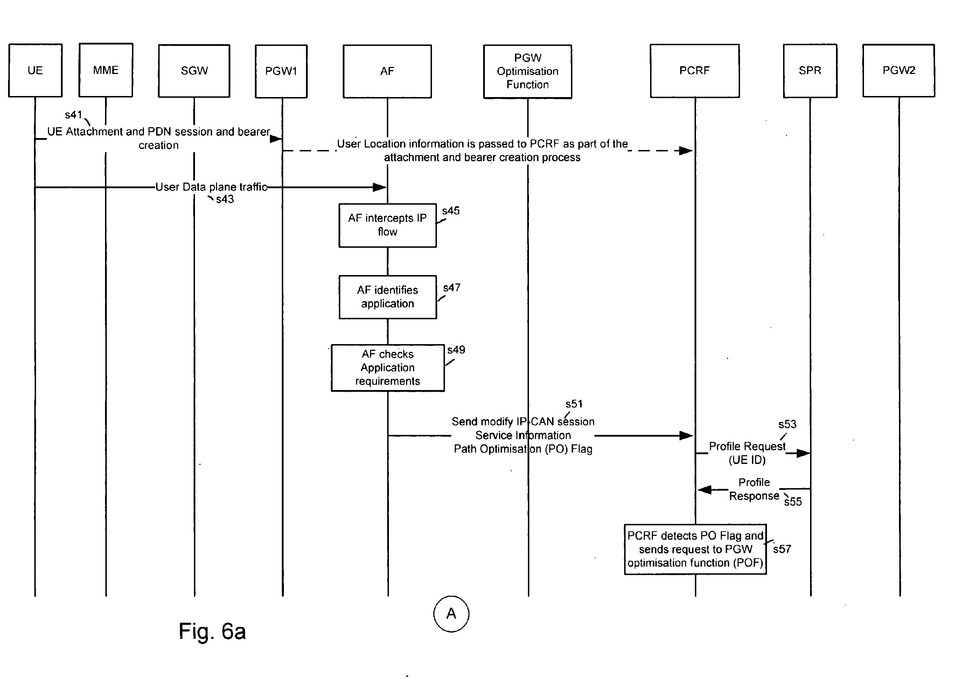

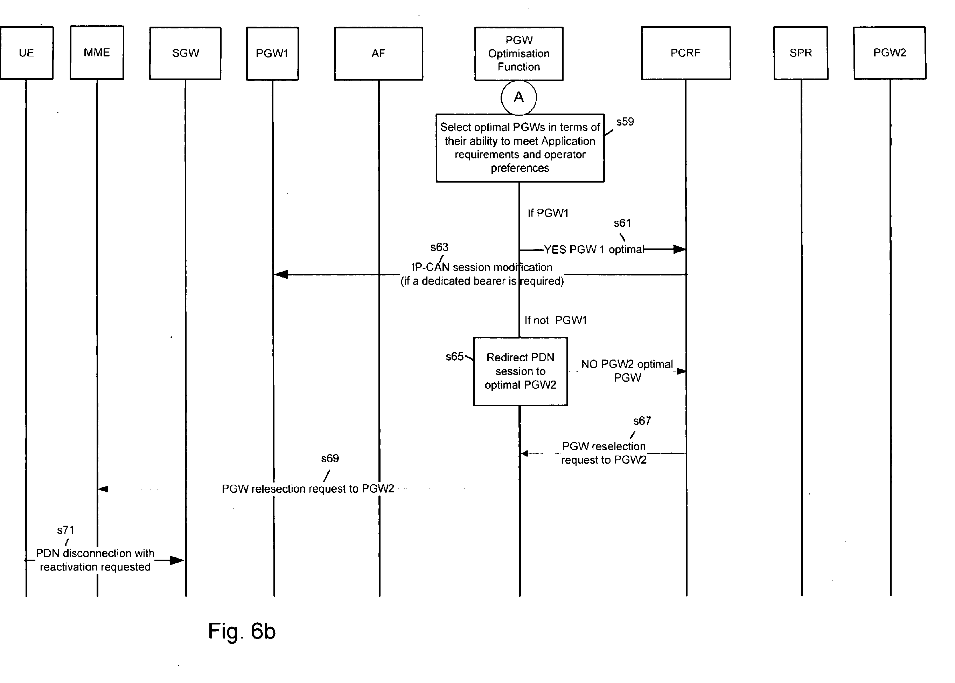

Now that the specific processing of the POF has been described, the overall operation of the network 1 to carry out a reselection will be described with reference to Figure 6.

Figure 6 is a system flowchart showing the interaction between the various components of the network illustrated in Figure 1 in accordance with the first embodiment.

In step s41, a user connects to the network 1 using their user device 3. As is conventional, the user device 3 is allocated a PGW in the Home network (as default policy for that operator). Furthermore the user location information is passed to the PCRF as part of the attachment and bearer creation process.

Now that the session has been created, in step s43 the user starts generating data traffic relevant to a type of application class, this data is either intercepted or terminated by the AF 9 in the mobile operator's network outside of the EPC.

Once this data is available to the AF, in step s45 the AF intercepts IP Flows, in step s47 the AF identifies the application, for example "Real-time gaming" and in step s49 the AF checks the application requirements. After the requirements have been determined, in step s51 the AF 9 passes modify IP-CAN session service information to the PCRF including a Path Optimisation (PO) flag. An example of the information is:

`Media Type = "gaming media", Bandwidth "1Mbps", Flow description (IP Source and destination / protocol – "gaming protocol"), priority indicator=3, Application service provider="gaming provider".`

Once the PCRF receives the modify IP-CAN session service information, in step s53 it requests UE ID from a subscription profile repository (SPR) and in steps s55 receives a response. In step s57 the PCRF detects the presence of the PO flag and sends a request to the "path optimisation function" POF. The request includes application requirements, user location & PGW1 ID.

Continuing the process in Figure 6B, in step s59 the POF checks the location of UE and compares application requirements before selecting an optimal PGW using the processing described in Figures 3 and 4 described above.

If the determination is that PGW1 is already optimal then in step s61 the determination is returned to the PCRF which triggers an IP-CAN session modification in step s63 if a dedicated bearer is required for PGW1.

Alternatively if the POF determines that PGW2 would be more optimal then this result is returned to the PCRF in step s65. In response, the PCRF triggers a PGW reselection request to PGW2 via the POF in step s67. In step s69 the POF forwards the request to the MME and in step s71 the user device signals a PDN disconnection with reactivation request.

As described above, in the first embodiment, a gateway reselection system which can match user activities to an appropriate PGW.

Second Embodiment

The first embodiment describes a home network gateway reselection method. In a second embodiment, the operation of the POF is applied to a roaming situation where it may be advantageous to perform local breakout of traffic. Typically when a roaming device attaches to the visited network, default roaming policies are used and bearers are normally routed to the home network. Some types of traffic, such as gaming would benefit from local breakout due to latency requirements.

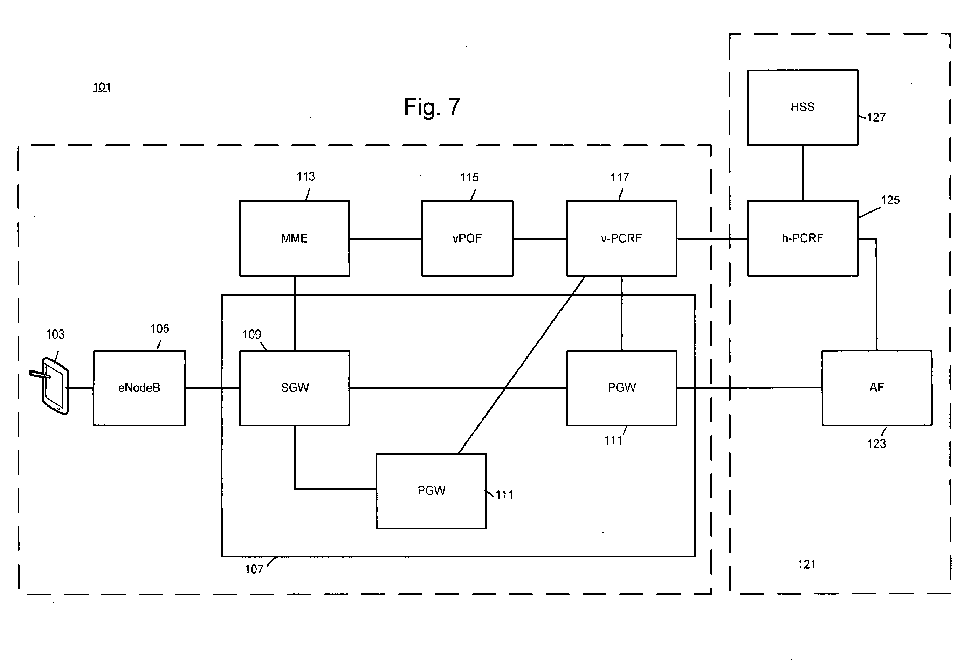

Figure 7 is schematic diagram of a network providing gateway reselection in accordance with a second embodiment of the invention.

In the second embodiment, a user device 103 abroad and roaming on a visitor network 101. The user device connects via an eNodeB 105 to access an EPC 107 having SGWs 109 and PGWs 111. The visitor network also includes an MME 113, vPOF 115 and v-PCRF 117. These components function is generally the same way as the related components in the first embodiment.

Furthermore, figure 6 shows the user's home network 121 which contains an application function 123, a home PCRF 125 and a HSS 127.

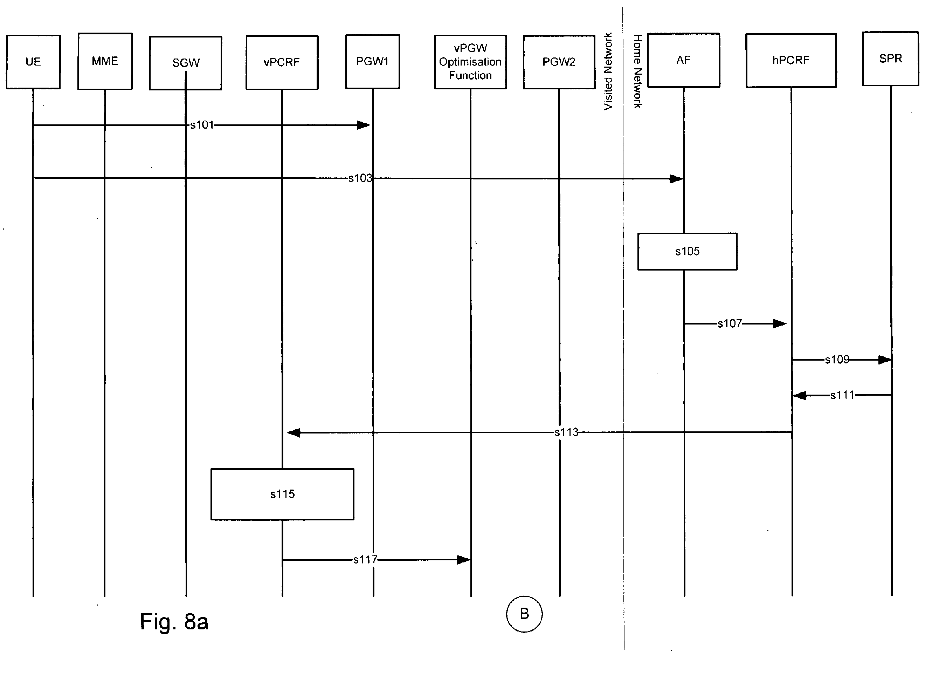

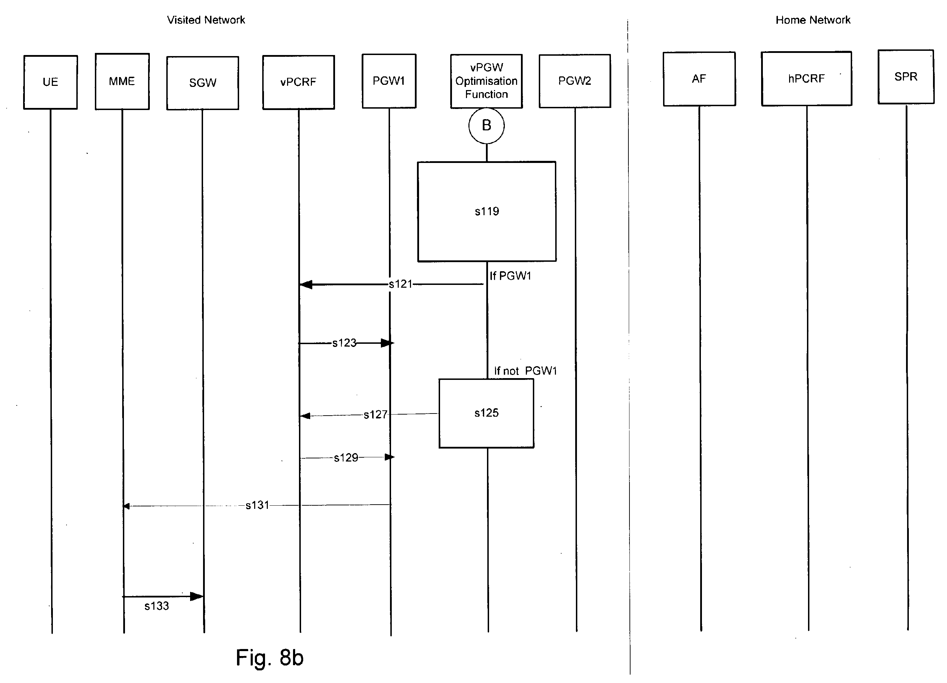

Figure 8 is a system flowchart showing the interaction between the various components of the network illustrated in Figure 7 in accordance with the second embodiment.

In step s101 the user connects to the visited network and is allocated a PGW in the Visited network in accordance with the default policy for that operator and furthermore the user location information is passed to the visitor PCRF.

In step s103 the user starts generating traffic which is intercepted or terminated by the AF on the home network. In response to the traffic, the AF in step s105 intercepts the IP Flow, identifies the type of application and checks the application requirements in a similar manner to steps s45 to s49 in the first embodiment.

In step s107 the AF passes modify IP-CAN session service information including Path Optimisation (PO) flag to the h-PCRF. The h-PCRF requests UE ID from the SPR in step s109 and receives a response in step s111.

Since the h-PCRF does not directly communicate with the POF in the visitor network, in step s113 the h-PCRF sends IP-CAN modification information to the v-PCRF, also including service information, user location (assuming user location is known) and the presence of the PO flag.

In step s115 the v-PCRF detects the PO flag and sends a request to the Visiting "path optimisation function" (vPOF) in step s117 including the application requirements, user location & PGW1 ID.

In step s119 the vPOF checks the location of the UE and compares the application requirements to select an optimal PGW as in the first embodiment.

If PGW1 is determined to be optimal then this result is returned to the v-PCRF in step s121 and in step s123 the IP-CAN session modification is triggered if a dedicated bearer is required for PGW1.

Alternatively, if the vPOF determines at step s125 that PGW2 is optimal, or simply that PGW1 was not optimal, then in step s127 the vPOF notifies the vPCRF that PGW2 is optimal.

In step s129 the V-PCRF sends a PGW reselection request to PGW1, in step s131 PGW1 sends a reselection request to PGW2 to MME and in step s133 the MME issues a PDN disconnection with reactivation request.

The second embodiment allows local breakout while maintaining the application function and POF functionality of the first embodiment.

Third embodiment

In the third embodiment, the PGW optimisation can be applied to a home routed roaming scenario.

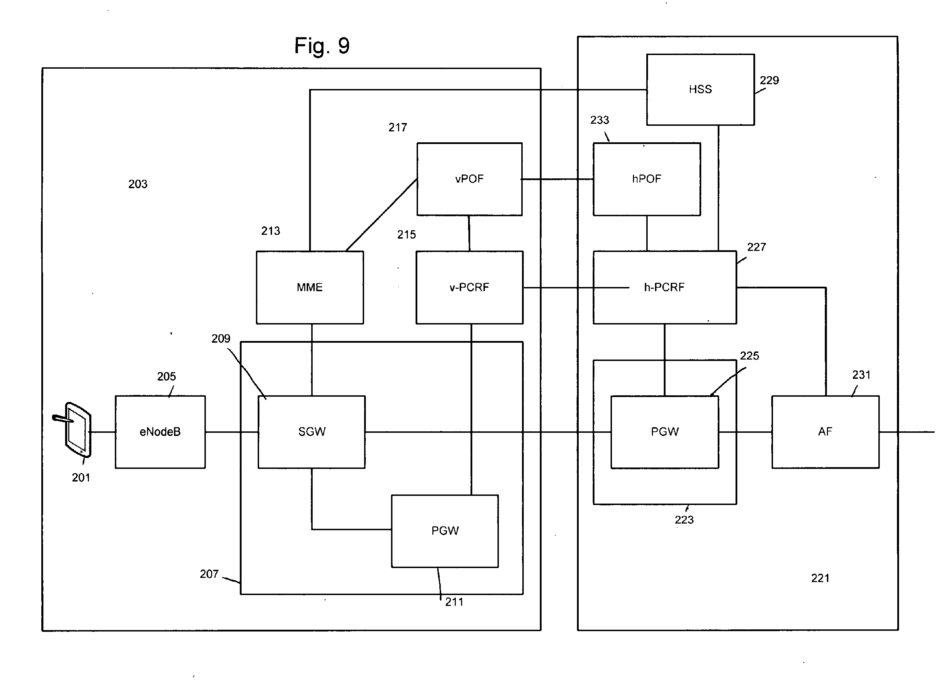

Figure 9 is schematic diagram of a network providing gateway reselection in accordance with a third embodiment of the invention.

In this embodiment, a user device 201 is connected to a visitor network 203 via an eNodeB 205. An EPC core 207 contains an SGW 209 and a PGW 211. Other components include an MME 213, visitor PCRF 215 and a visitor POF 217 which function in a similar manner to equivalent units in the earlier embodiments.

The user's home network 221 is also shown. This network contains an EPC 223 having a PGW 225, a PCRF 227, HSS 229 as well as an Application Function 231 and home POF 233.

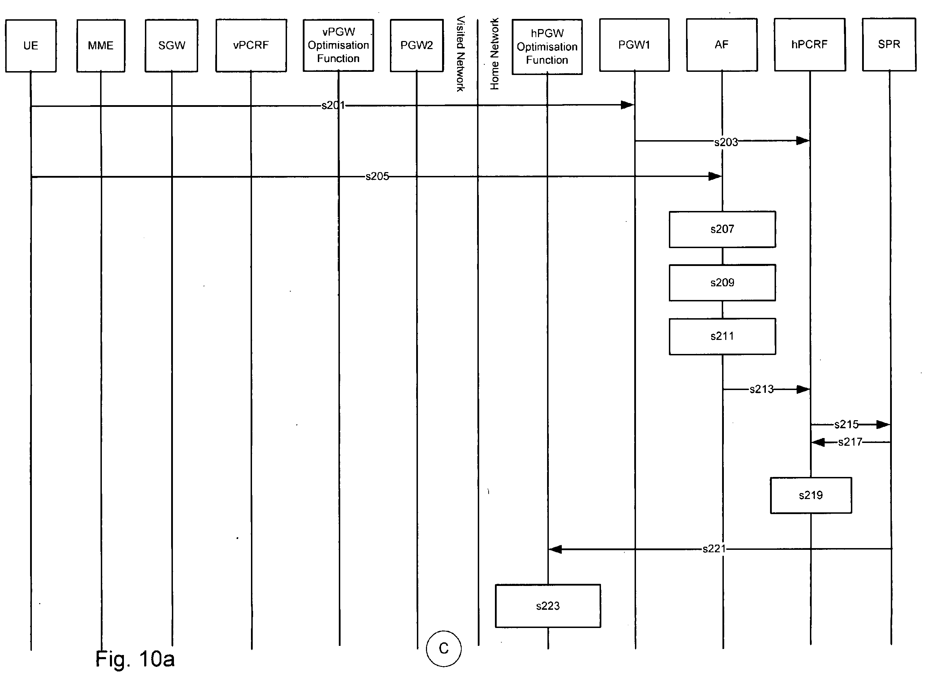

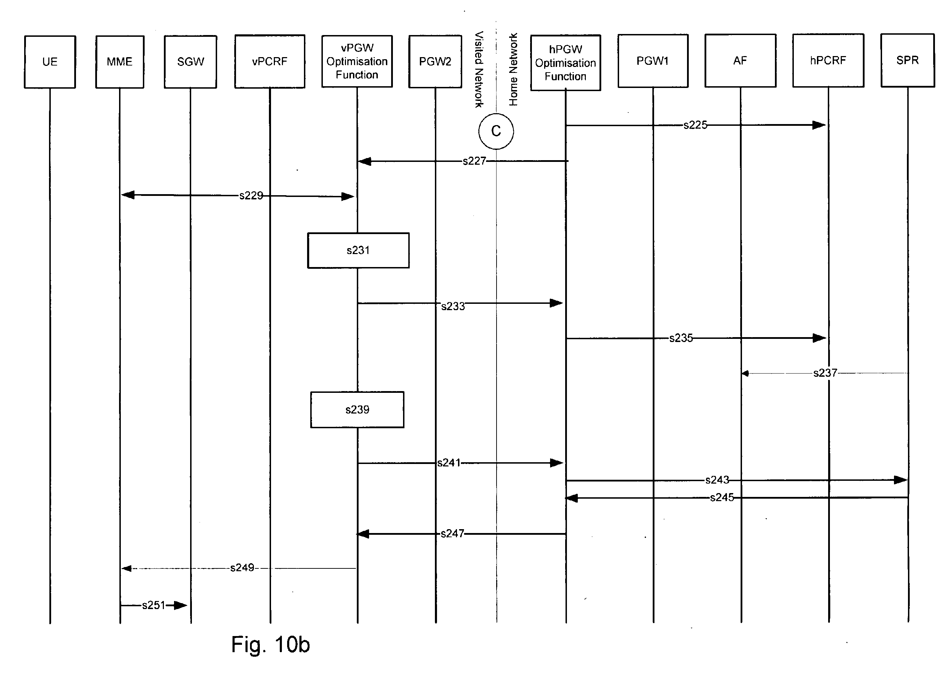

Figure 10 is a system flowchart showing the interaction between the various components of the network illustrated in Figure 8 in accordance with the third embodiment.

In step s201 the user connects to the network and is allocated PGW1 in the Home network in accordance with the default policy for that operator and in step s203 the PGW1 informs the home PCRF of the visitor MME's identity and the visited network ID. In this configuration, the actual location of the user device is not available to the home network components.

As in previous embodiments, when the user starts generating traffic in step s205, the traffic is intercepted or terminated by AF in the home network in step s207 followed by an identification of the application in step s209 and a check of the application requirements in step s211.

Once complete, in step s213 the AF passes modify IP-CAN session service information with a Path Optimisation (PO)flag to the h-PCRF. Following this message the h-PCRF requests UE ID from the SPR in step s215 and receives a response in s217.

In step s219 the h-PCRF detects the PO flag and sends a request to the Home path optimisation function (hPOF) including the application requirements, a visitor network ID & PGW1 ID. It cannot send the user device's location since this is not known to the home network in this embodiment.

In s223 the hPOF checks the application requirements and tries to select an optimal PGW. If there is an optimal PGW in the home network the in step s225 the POF sends a message to the h-PCRF and processing proceeds as described in the first embodiment.

However, if the hPOF determines that there are no optimal home PGWs then in step s227 the hPOF sends a request to vPOF (send application requirements, user location & PGW1 ID). In response, the vPOF checks UE location with the MME in step s227.

With this new information, the vPOF checks the location of UE and compares to application requirements to try to select an optimal PGW in step s231.

If no suitable PGW is found, then the vPOF informs the hPOF in step s233 and the hPOF informs the h-PCRF in step s235. Following this step the IP-CAN session modification is triggered if dedicated bearer is required for PGW1.

Otherwise, in step s239 the vPOF notifies the hPOF that PGW2 is suitable and this message is forwarded to the h-PCRF. Following which, the h-PCRF triggers PGW a reselection request to PGW2 in step s243 and the vPOF (via hPOF) sends a PGW reselection request to PGW2. After further signalling steps, in step s249 the vPOF sends reselection requests for PGW2 to MME and finally the MME sends a PDN disconnection with reactivation request to the SGW.

Three embodiments relating to a local network usage, local breakout and home routing have been described in which a PGW can be reselected from the default one in accordance with the application used by a user device. In particular a PGW Optimisation Function located on the network operates in each case to match the capabilities of the gateways with the application requirements and interactions between the various network components are described in order to implement the reselections.

Alternatives and Modifications

In the embodiments, a particular selection algorithm was used to select the optimal PGW. It will be appreciated that many different equivalent algorithms could be used in order to identify an optimal PGW without departing from the scope of the invention.

In the embodiments, the various POFs are separate network entities. In an alternative, the POFs are collocated with either the PCRFs or MME.

In the embodiments, various signalling is required to enable the MME to request the PDN reselection step. In an alternative, the POF can directly request reselection.

Additional Implementation Details

The systems and methods of the above embodiments may be implemented in a computer system (in particular in computer hardware or in computer software or a combination of both) in addition or as an alternative to the structural components and user interactions described. The term "computer system" includes the hardware, software and data storage devices for embodying a system or carrying out a method according to the above described embodiments. For example, a computer system may comprise a central processing unit (CPU), input means, output means and data storage. Alternatively, a microprocessor, plural microprocessors, microcontroller, plural microcontrollers, ASIC and/or FPGA may be employed. The computer system may have a monitor to provide a visual output display. The data storage may comprise RAM, hard disk drive (HDD) or other computer readable media, including portable media and optical media. The computer system may include a plurality of computing devices connected by a network and able to communicate with each other over that network.

The methods of the above embodiments may be provided as computer programs or as computer program products or computer-readable media carrying a computer program which is arranged, when run/executed on a computer, to perform the method(s) described above.

The term "computer readable media" includes, without limitation, any medium or media which can be read and accessed directly by a computer or computer system. The media can include, but are not limited to, magnetic storage media such as floppy discs, hard disc storage media and magnetic tape; optical storage media such as optical discs or CD-ROMs; electrical storage media such as memory, including RAM, ROM and flash memory; and hybrids and combinations of the above such as magnetic/optical storage media.

It will be appreciated that the above described embodiments are purely illustrative and are not limiting on the scope of the invention. Other variations and modifications will be apparent to persons skilled in the art upon reading the present application.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

**Claims**

1.   A method of routing data traffic across a network between a user device and an application server, the data traffic being transferred via at least one of a plurality of packet gateways, the method comprising:

processing the data traffic being transmitted by the user device to determine service requirements of said traffic;
comparing the service requirements against a set of gateway properties relating to each of the plurality of gateways in the network;
selecting a different one of said at least one gateways over which said user data traffic should be transferred in dependence on the comparison step; and
transferring data traffic between said user device and said application server via the selected gateway.

2.   A method according to claim 1 wherein the gateway properties include at least one of:

Gateway capabilities, operator preferences, network cost and backhaul ability.

3.   A method according to claim 1 or 2 further comprising determining Quality of Service and delay service requirements.

4.   A method according to any preceding claim, wherein the gateways are ranked according to each gateway property.

5.   A method according to any preceding claim wherein the comparing involves calculating a weighted score for each gateway based on each of the gateway properties.

6.   A method according to any preceding claim wherein data is transferred via two networks, and the selected gateway is located on a different network.

7.   Apparatus for selecting a gateway device for data transfer between a user device and an application server, the data traffic being transferred via at least one of a plurality of packet gateways, comprising:

means for determining service requirements of said traffic;
means for comparing the service requirements against a set of gateway properties relating to each of the plurality of gateways in the network;
means for selecting a different one of said at least one gateways over which said user data traffic should be transferred in dependence on the comparison; and
means for transferring data traffic between said user device and said application server via the selected gateway.

8.   Apparatus according to claim 7 wherein the gateway properties include at least one of:

gateway capabilities, operator preferences, network cost and backhaul ability.

9.   Apparatus according to claim 7 or 8 wherein the determining means determines Quality of Service and delay service requirements for the user device traffic.

10.  Apparatus according to any of claims 7 to 9, wherein the gateways are ranked according to each gateway property.

11.  Apparatus according to any of claims 7 to 10, wherein the comparing means involves calculating a weighted score for each gateway based on each of the gateway properties.

12.  A computer program comprising instructions that when executed by a computer apparatus control it to perform the method of any of claims 1 to 6.

13. A non-transitory computer readable storage medium having stored thereon computer-readable code, which, when executed by computing apparatus, causes the computer apparatus to perform the method according to any of claims 1 to 6.

14. An evolved packet core network system having a plurality of packet gateways and configured to route data traffic between a user device and an application server, comprising:

application determining means for determining the requirements of data traffic being transmitted by the user device;
gateway reselection means for:

comparing the requirements against a set of gateway properties associated with the gateways in the network;
selecting a gateway which is better suited to the data traffic; and
causing the selected gateway to route data for the user device.

Fig. 1

| PGW | Gaming | Email | Video |
|---|---|---|---|
| PGW1 | 5.4 | 5.1 | 7.5 |
| PGW2 | 5.5 | 2.7 | 7.1 |
| PGW3 | 5.3 | 3.6 | 8.3 |
| PGW4 | 8.3 | 8.1 | 1.4 |
| PGW5 | 1.8 | 6.1 | 4.2 |
| PGW6 | 2.9 | 6.8 | 3.1 |

39

Fig. 5

9

Interface to PCRF — 31

Interface to MME — 33

PGW selector — 35

Optimal criteria tables — 37

Weightings — 39

Fig. 2

POF

s1

Receive incoming request from PCRF
- Application requirements (Qos, Delay);
- User Location (UE Network Location)
- PGW_ID

s3

Rank PGWs based on several criteria

s5

Apply weightings

s7

Select Optimal PGW

s9

Respond to PCRF

End

Fig. 3

Rank PGWs

s31

Determine PGW capabilities match to Application requirements

s33

Determine Operator preferences

s35

Determine Cost

s37

Determine backhaul's ability to meet Application requirements

End

Fig. 4

Fig. 6a

Fig. 6b

Fig. 7

Fig. 8a

Fig. 8b

EP 2 785 109 A1

Fig. 9

Fig. 10a

Fig. 10b

**EUROPEAN SEARCH REPORT**

Application Number

EP 13 25 0042

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/131338 A1 (HU Q JAMES [US] HU QINGMIN [US]) 2 June 2011 (2011-06-02) | 1-3,5-9, 11-14 | INV. H04W48/00 |
| Y | * paragraphs [0084], [0088], [0090], [0094], [0096], [0099]; figures 8,10 * ----- | 4,10 | |
| Y | US 8 059 557 B1 (SIGG JASON P [US] ET AL) 15 November 2011 (2011-11-15) * column 2, line 49 - line 63; figure 2 * * column 3, line 10 - line 17 * * column 3, line 42 - line 43 * * column 9, line 22 - line 56 * ----- | 4,10 | |

TECHNICAL FIELDS SEARCHED (IPC)

H04W

The present search report has been drawn up for all claims

| Place of search | Date of completion of the search | Examiner |
|---|---|---|
| The Hague | 29 August 2013 | Tsuchiya, Kuni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 25 0042

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2013

| Patent document cited in search report | Publication date | Patent family member(s) | Publication date |
|---|---|---|---|
| US 2011131338 A1 | 02-06-2011 | NONE | |
| US 8059557 B1 | 15-11-2011 | NONE | |

EPO FORM P0459

For more details about this annex : see Official Journal of the European Patent Office, No. 12/82